# EUROPÄISCHE PATENTSCHRIFT

(11) **EP 1 363 815 B1**
(45) Veröffentlichungstag und Bekanntmachung des Hinweises auf die Patenterteilung: **15.09.2004**
(21) Anmeldenummer: 02722271.0
(22) Anmeldetag: 26.03.2002
(51) Int. Cl.: B60R 25/02, E05B 47/00, E05B 65/12

(54) **SCHLOSS, INSBESONDERE ZUM VERRIEGELN DER LENKSPINDEL EINES KRAFTFAHRZEUGS**
LOCK, PARTICULARLY FOR LOCKING THE STEERING SPINDLE OF A MOTOR VEHICLE
SERRURE, SERVANT NOTAMMENT A VERROUILLER L'ARBRE DE DIRECTION D'UNE AUTOMOBILE

(30) Priorität: 04.05.2001 DE 10121714
(43) Veröffentlichungstag der Anmeldung: 26.11.2003
(73) Patentinhaber: HUF HÜLSBECK & FÜRST GMBH & CO. KG, 42551 Velbert (DE)
(72) Erfinder: ZILLMAN, Horst, 81243 München (DE)
(74) Vertreter: Oedekoven, Wolf-Dieter, Dipl.-Ing.
(86) Internationale Anmeldenummer: PCT/EP2002/003367
(87) Internationale Veröffentlichungsnummer: WO 2002/090152

(56) Entgegenhaltungen:
- DE-C- 4 436 326
- DE-C- 19 961 975

## Beschreibung

Die Erfindung bezieht sich auf ein Schloß, insbesondere zum Verriegeln der Lenkspindel eines Kraftfahrzeugs, mit einem Sperrglied, welches zwischen einer Verriegelungsstellung und einer Entriegelungsstellung hin- und herbewegbar ist, und mit einem mittels eines Antriebs hin- und herdrehbaren Steuerglied zur Axialverschiebung des Sperrgliedes oder eines mit dem Sperrglied zusammenwirkenden Betätigungsgliedes in der einen oder in der anderen Richtung, wobei das Steuerglied das Sperrglied oder dessen Betätigungsglied umschließt und
a) zwei innere Schrägflächen oder zwei schraubenlinienförmig verlaufende innere Nuten aufweist, welche mit zwei einander bezüglich der Drehachse des Steuergliedes diametral gegenüberliegenden, radialen Vorsprüngen des Sperrgliedes oder des Betätigungsgliedes desselben zusammenwirken und jeweils an dem der Entriegelungsstellung des Sperrgliedes zugeordneten Ende in eine Endfläche übergehen, die in einer zur Drehachse des Steuergliedes senkrechten Ebene liegt, oder
b) ein Innengewinde aufweist, welches mit einem bezüglich der Drehachse des Steuergliedes radialen Vorsprung des Sperrgliedes oder des Betätigungsgliedes desselben zusammenwirkt und an dem der Entriegelungsstellung des Sperrgliedes zugeordneten Ende in eine Endfläche übergeht, die in einer zur Drehachse des Steuergliedes senkrechten Ebene liegt.

Zum Stand der Technik gehört ein Schloß, insbesondere zum Verriegeln der Lenkspindel eines Kraftfahrzeugs, mit einem Sperrglied, welches zwischen einer Verriegelungsstellung und einer Entriegelungsstellung hin- und herbewegbar ist, und mit einem mittels eines Antriebs hin- und herdrehbaren Steuerglied zur Axialverschiebung des Sperrgliedes oder eines mit dem Sperrglied zusammenwirkenden Betätigungsgliedes in der einen oder in der anderen Richtung, wobei besondere Maßnahmen getroffen sind, um sicherzustellen, daß das Sperrglied stets nur genau bis in die Verriegelungsstellung oder in die Entriegelungsstellung und nicht weiter läuft, auch dann nicht, wenn sich das Steuerglied danach noch weiter dreht, sein Antrieb also nicht augenblicklich stillsteht, sobald das Sperrglied die Verriegelungsstellung oder die Entriegelungstellung erreicht hat. Zu diesem Zweck sind das Sperrglied oder dessen Betätigungsglied und das Steuerglied koaxial angeordnet und wirken das Sperrglied oder dessen Betätigungsglied und das Steuerglied über
zwei radiale Vorsprünge, welche einander bezüglich der Drehachse des Steuergliedes diametral gegenüberliegen und jeweils senkrecht zur Drehachse des Steuergliedes beweglich sowie federbelastet sind, und
zwei Schrägflächen sowie zwei Endflächen, welche in derselben zur Drehachse des Steuergliedes senkrechten Ebene liegen und jeweils an die eine oder an die andere Schrägfläche anschließen, um sich bis neben die andere oder die eine Schrägfläche zu erstrecken,
derart zusammen, daß das innere Sperrglied oder das innere Betätigungsglied desselben beim Drehen des äußeren Steuergliedes in derjenigen Richtung, in welcher die Vorsprünge auf den Schrägflächen zu den Endflächen hinlaufen, entsprechend axial verschoben wird, um dann, wenn die Vorsprünge von den Schrägflächen auf die Endflächen übergehen, stillzustehen und in der erreichten Axialstellung zu bleiben, bis das Steuerglied in der entgegengesetzten Richtung gedreht wird und die Vorsprünge auf den Schrägflächen von den Endflächen weg laufen, so daß das Sperrglied oder das Betätigungsglied desselben sich in der entgegengesetzten Richtung axial verschiebt. Die Vorsprünge können am Sperrglied oder am Betätigungsglied desselben vorgesehen sein, die Schrägflächen und die Endflächen am Steuerglied, wobei die Vorsprünge von zwei Stiften gebildet sein können, welche in einer gemeinsamen Querbohrung des Sperrgliedes oder des Betätigungsgliedes desselben angeordnet und durch eine gemeinsame Schraubendruckfeder belastet sind ( DE 44 36 326 C1).

Vorgeschlagen wurde auch schon ein Schloß, insbesondere zum Verriegeln der Lenkspindel eines Kraftfahrzeugs, mit einem Sperrglied, welches zwischen einer Verriegelungsstellung und einer Entriegelungsstellung hin- und herbewegbar ist, und mit einem mittels eines Antriebs hin- und herdrehbaren Steuerglied zur Axialverschiebung des Sperrgliedes oder eines mit dem Sperrglied zusammenwirkenden Betätigungsgliedes in der einen oder in der anderen Richtung, wobei das Steuerglied das Sperrglied oder dessen Betätigungsglied umschließt und zwei innere Schrägflächen aufweist, welche mit zwei einander bezüglich der Drehachse des Steuergliedes diametral gegenüberliegenden, radialen Vorsprüngen des Sperrglieds oder des Betätigungsgliedes desselben zusammenwirken und jeweils an den beiden Enden in je eine Endfläche übergehen, die in einer zur Drehachse des Steuergliedes senkrechten Ebene liegt, und wobei
die eine Schrägfläche des Steuergliedes und deren beide Endflächen gegenüber der anderen Schrägfläche des Steuergliedes und deren beiden Endflächen in Richtung der Drehachse des Steuergliedes versetzt sind und sich in einem größeren Abstand um die Drehachse des Steuergliedes herum erstrecken und
die beiden Vorsprünge des Sperrgliedes oder des Betätigungsgliedes desselben unbeweglich angeordnet sind, wobei derjenige Vorsprung, mit welchem die von der Drehachse des Steuergliedes weiter entfernte Schrägfläche des Steuergliedes und deren beide Endflächen zusammenwirken, gegenüber demjenigen Vorsprung, mit welchem die andere Schrägfläche des Steuergliedes und deren beide Endflächen zusammenwirken, entsprechend weit in Richtung der Drehachse des Steuergliedes versetzt ist und eine entsprechend größere Länge aufweist.

Das Steuerglied kann an dem der zugehörigen Schrägfläche fernen Ende jeder Endfläche eine Anschlagfläche für denjenigen Vorsprung des Sperrgliedes oder des Betätigungsgliedes desselben aufweisen, mit welchem die Endfläche zusammenwirkt. Die Vorsprünge des Sperrgliedes oder des Betätigungsgliedes desselben können jeweils von einem in eine Bohrung des Sperrgliedes oder des Betätigungsgliedes desselben eingepreßten Stift gebildet sein ( DE 101 09 609.7).

Vorgeschlagen wurde weiterhin auch schon ein Schloß, insbesondere zum Verriegeln der Lenkspindel eines Kraftfahrzeugs, mit einem Sperrglied, welches zwischen einer Verriegelungsstellung und einer Entriegelungsstellung hin- und herbewegbar ist, und mit einem mittels eines Antriebs hin- und herdrehbaren Steuerglied zur Axialverschiebung des Sperrgliedes oder eines mit dem Sperrglied zusammenwirkenden Betätigungsgliedes in der einen oder in der anderen Richtung, wobei das Sperrglied oder dessen Betätigungsglied und das Steuerglied koaxial angeordnet sind und über
einen Querstift, welcher in einer Querbohrung des inneren Sperrgliedes oder des inneren Betätigungsgliedes desselben axial verschieblich ist, und
zwei schraubenlinienförmig verlaufende innere Nuten sowie eine ebene Endfläche des äußeren Steuergliedes, welche sich senkrecht zur Drehachse des Steuergliedes erstreckt, an die beiden Nuten anschließt und durch eine Seitenflanke begrenzt ist, die vom Boden einer Nut außen im Abstand an der anderen Nut vorbei zum Sperrglied oder zum Betätigungsglied desselben hin verläuft,
derart zusammenwirken, daß das Sperrglied oder das Betätigungsglied desselben beim Drehen des Steuergliedes in derjenigen Richtung, in welcher die beiden aus der Querbohrung des Sperrgliedes oder des Betätigungsgliedes desselben vorstehenden Enden des Querstiftes in den Nuten zu der Endfläche des Steuergliedes hinlaufen, entsprechend axial verschoben wird, um dann, wenn die Enden des Querstiftes von den Nuten auf die Endfläche übergehen, stillzustehen und in der erreichten Axialstellung zu bleiben, bis das Steuerglied in der entgegengesetzten Richtung gedreht wird und die Enden des Querstiftes in den Nuten von der Endfläche weg laufen, so daß das Sperrglied oder das Betätigungsglied desselben sich in der entgegengesetzten Richtung axial verschiebt. Die Nuten des Steuergliedes können an den von der ersten Endfläche entfernten Enden in eine zweite ebene Endfläche des Steuergliedes übergehen, welche sich senkrecht zur Drehachse des Steuergliedes erstreckt und durch eine Seitenflanke begrenzt ist, die vom Boden einer Nut außen im Abstand an der anderen Nut vorbei zum Sperrglied oder zum Betätigungsglied desselben hin verläuft, so daß das Sperrglied oder das Betätigungsglied desselben beim Drehen des Steuergliedes in derjenigen Richtung, in welcher die beiden aus der Querbohrung des Sperrglieds oder des Betätigungsgliedes desselben vorstehen Enden des Querstiftes in den Nuten von der ersten Endfläche zu der zweiten Endfläche des Steuergliedes laufen, nach der entsprechenden Axialverschiebung des Sperrgliedes oder des Betätigungsgliedes desselben dann, wenn die Enden des Querstiftes von den Nuten auf die zweite Endfläche übergehen, stillsteht und in der erreichten Axialstellung bleibt, bis das Steuerglied in der entgegengesetzten Richtung gedreht wird und die Enden des Querstiftes in den Nuten von der zweiten Endfläche zu der ersten Endfläche laufen, so daß das Sperrglied oder das Betätigungsglied desselben sich in der entgegengesetzten Richtung axial verschiebt ( DE 100 30 688.8 ).

Bekannt ist schließlich auch noch ein Schloß, insbesondere zum Verriegeln der Lenkspindel eines Kraftfahrzeugs, mit einem Sperrglied, welches zwischen einer Verriegelungsstellung und einer Entriegelungsstellung hin- und herbewegbar ist, und mit einem mittels eines Antriebs hin- und herdrehbaren Steuerglied zur Axialverschiebung des Sperrgliedes in der einen oder in der anderen Richtung, wobei das Steuerglied das Sperrglied umschließt und ein Innengewinde aufweist, welches mit einem bezüglich der Drehachse des Steuergliedes radialen Vorsprung des Sperrgliedes zusammenwirkt und an den beiden Enden in je eine Endfläche übergeht, die in einer zur Drehachse des Steuerglieds senkrechten Ebene liegt. Der Vorsprung des Sperrgliedes ist von einem Querstift gebildet, der in einer Querbohrung des Sperrgliedes axial verschieblich ist. Jede Endfläche des Innengewindes des Steuergliedes ist von einer derart verlaufenden Seitenflanke begrenzt, daß der Querstift nach dem beim Drehen des Steuergliedes in der entsprechenden Richtung erfolgten Übergang auf die Endfläche auf derselben bleibt, auch wenn das Steuerglied in derselben Richtung weitergedreht wird, und erst dann die Endfläche verläßt und wieder mit einem aus dem Sperrglied ragenden Ende in das Innengewinde eintritt, wenn das Steuerglied in der entgegengesetzten Richtung gedreht wird (DE 199 61 975 C1).

Der Erfindung liegt die Aufgabe zugrunde, ein Schloß der eingangs angegebenen Art zu schaffen, dessen Funktionsweise noch weiter verbessert ist.

Diese Aufgabe ist durch die im kennzeichnenden Teil des Patentanspruchs 1 angegebenen Merkmale gelöst. Vorteilhafte Ausgestaltungen des erfindungsgemäßen Schlosses sind in den restlichen Patentansprüchen angegeben.

Nachstehend ist eine Ausführungsform des erfindungsgemäßen Schlosses anhand von Zeichnungen beispielsweise beschrieben. Darin zeigen :
Fig. 1 die Draufsicht in Richtung des Pfeils I in Fig. 2 bei abgenommenem Deckel ;
Fig. 2 den Längsschnitt entlang der Linie II-II in Fig. 1;
Fig. 3 den Längsschnitt des Steuergliedes entlang der Linie III-III in Fig. 1 und den Querstift des Betätigungsgliedes in perspektivischer Darstellung;
Fig. 4 die Draufsicht gemäß Fig. 1, wobei das Steuerglied eine andere Drehstellung einnimmt;
Fig. 5 den Längsschnitt entlang der Linie V-V in Fig. 4;
Fig. 6 den Längsschnitt des Steuergliedes entlang der Linie V-V in Fig. 4 und den Querstift des Betätigungsgliedes in perspektivischer Darstellung;
Fig. 7 die Draufsicht gemäß Fig. 1 und 4, wobei das Steuerglied eine andere Drehstellung einnimmt;
Fig. 8 den Längsschnitt entlang der Linie VIII-VIII in Fig. 7;
Fig. 9 den Längsschnitt des Steuergliedes entlang der Linie VIII -VIII in Fig. 7 in perspektivischer Darstellung;
Fig. 10 bis 16 verschiedene Drehstellungen des Steuergliedes bezüglich des Querstiftes des Betätigungsgliedes in der Draufsicht gemäß Fig. 1, 4 und 7;
Fig. 17 die Ansicht der dem Sperrglied zugewandten Seite einer Variante des Steuergliedes in der Drehstellung gemäß Fig. 10 bezüglich des Querstiftes des Betätigungsgliedes.

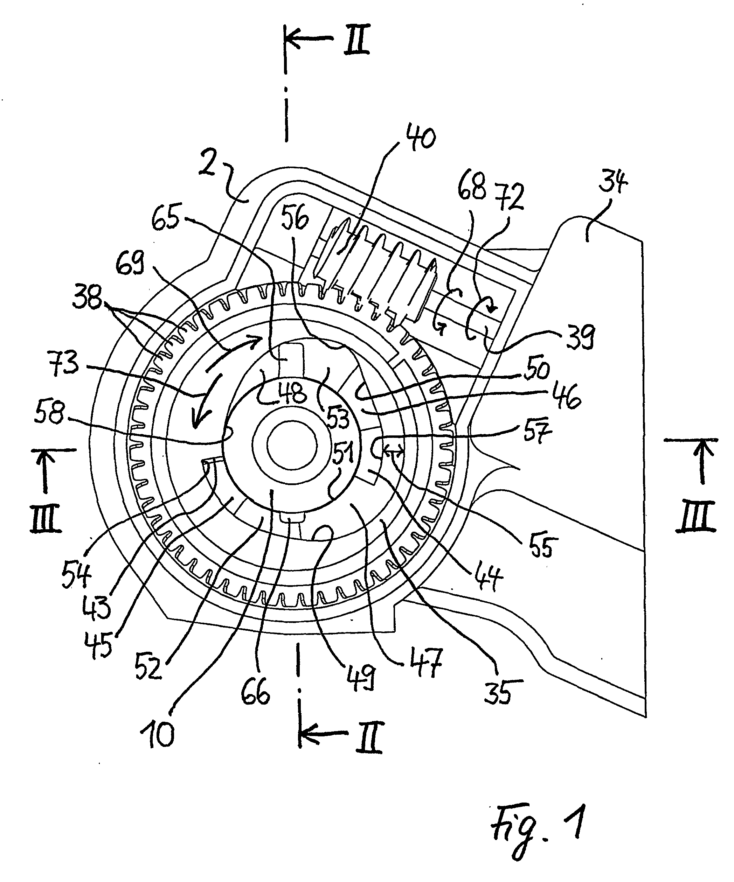

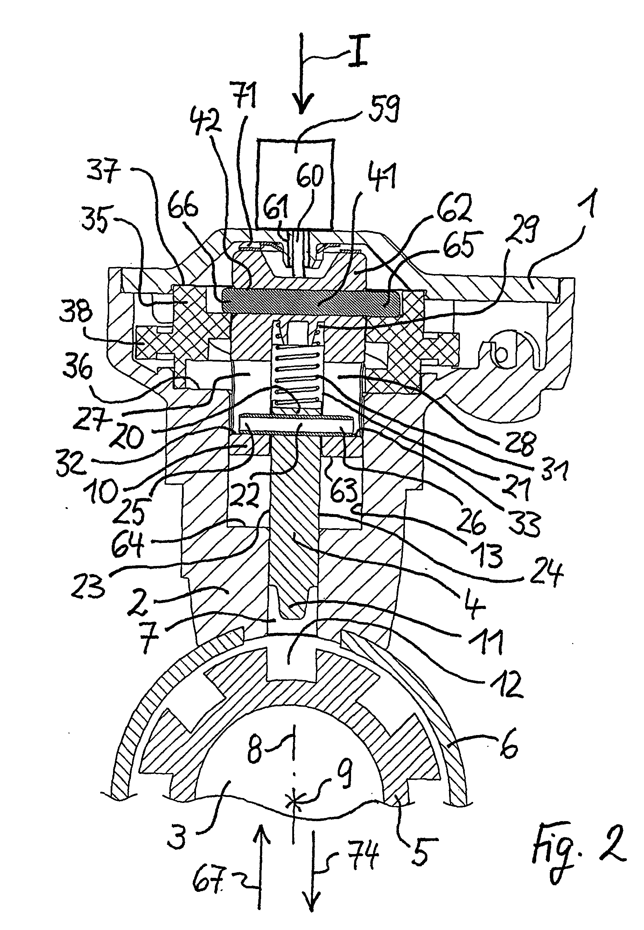

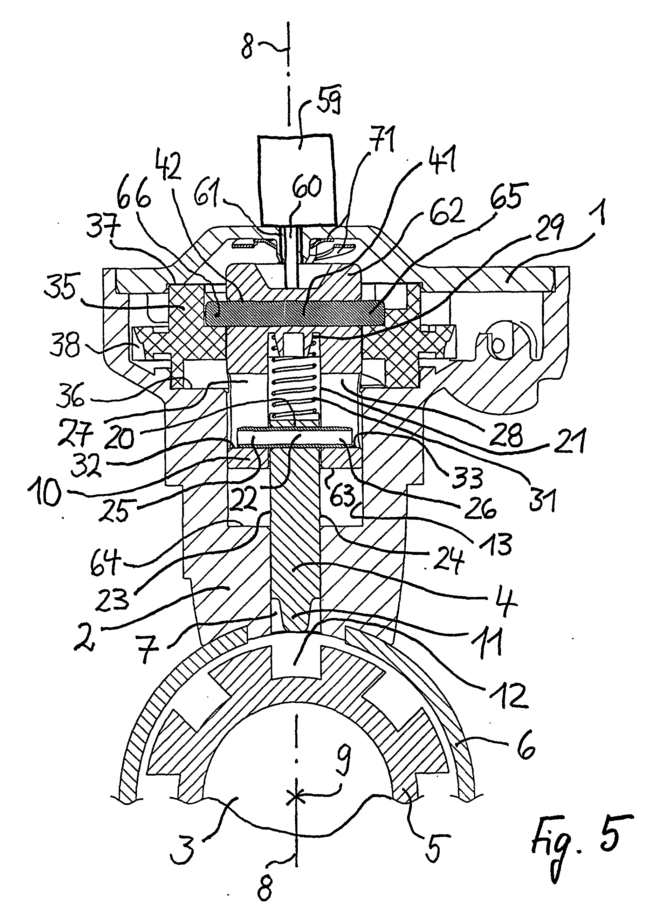

Das in Fig. 1 und 2, Fig. 4 und 5, Fig. 7 und 8 dargestellte Schloß mit einem durch einen Deckel 1 verschlossenen Gehäuse 2 dient zum Verriegeln der in Fig. 2 und 5 gezeigten Lenkspindel 3 eines Kraftfahrzeugs mittels eines Sperrgliedes 4, welches mit einer auf der Lenkspindel 3 befestigten Sperrhülse 5 zusammenwirkt. Die Lenkspindel 3 und die Sperrhülse 5 sind von einem Mantelrohr 6 umschlossen, auf welchem das Gehäuse 2 befestigt ist. Das Sperrglied 4 ist als Bolzen mit rechteckigem Querschnitt ausgebildet und in einem Kanal 7 entsprechenden Querschnitts des Gehäuses 2 axial verschieblich gelagert, dessen Längsachse 8 die Längsachse 9 der Lenkspindel 3 rechtwinklig schneidet.

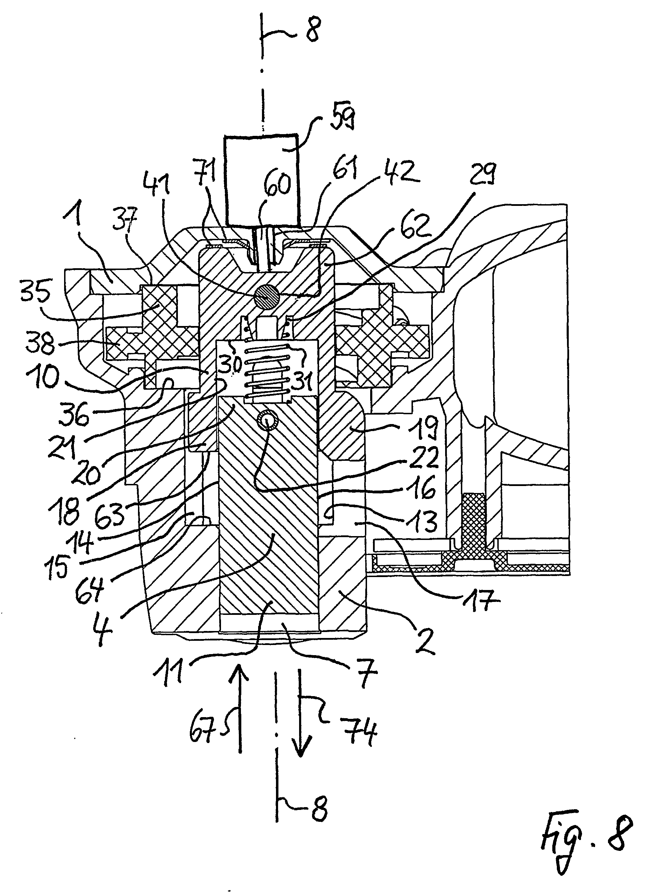

Das Sperrglied 4 ist mittels eines Betätigungsgliedes 10 aus einer Verriegelungsstellung, in welcher es mit seinem dem Betätigungsglied 10 abgewandten Ende 11 in eine von mehreren Sperröffnungen 12 der Sperrhülse 5 eingreift, so daß die Lenkspindel 3 nicht mehr gedreht werden kann, über die aus Fig. 5 ersichtliche erste Entriegelungsstellung in die aus Fig. 2 und 8 ersichtliche zweite Entriegelungsstellung und zurück in die Verriegelungsstellung bewegbar. In der ersten Entriegelungsstellung und in der zweiten Entriegelungsstellung greift das Sperrglied 4 mit seinem Ende 11 in keine der Sperröffnungen 12 der Sperrhülse 5 ein und gibt es die Lenkspindel 3 frei.

Das Betätigungsglied 10 ist als zylindrischer Bolzen ausgebildet und in einer zylindrischen Bohrung 13 des Gehäuses 2 axial verschieblich gelagert, welche sich koaxial zu dem das Sperrglied 4 aufnehmenden Kanal 7 erstreckt. Gegenüber der in Fig. 8 linken schmalen Seitenfläche 14 des Sperrgliedes 4 mündet eine im Gehäuse 2 ausgebildete Längsnut 15 in die Bohrung 13 und gegenüber der in Fig. 8 rechten schmalen Seitenfläche 16 des Sperrgliedes 4 kommuniziert die Bohrung 13 mit einem im Gehäuse 2 ausgebildeten Längschlitz 17. In die Längsnut 15 ragt ein äußerer radialer Vorsprung 18 des Betätigungsgliedes 10 und im Längsschlitz 17 ist eine äußere radiale Nase 19 des Betätigungsgliedes 10 aufgenommen.

Das der Lenkspindel 3 abgewandte Ende 20 des Sperrgliedes 4 ist in einem Sackloch 21 mit einem dem rechteckigen Querschnitt des Sperrgliedes 4 entsprechenden Querschnitt des Betätigungsgliedes 10 aufgenommen und mit einem Querstift 22 versehen, welcher sich senkrecht zu den beiden breiten Seitenflächen 23, 24 des Sperrgliedes 4 erstreckt und dessen beide aus dem Sperrglied 4 ragenden Enden 25, 26 in zwei seitliche Langlöcher 27, 28 des Betätigungsgliedes 10 eingreifen. Zwischen dem Ende 20 des Sperrgliedes 4 und einer ringförmigen Vertiefung 29 im Boden 30 des Sacklochs 21 des Betätigungsgliedes 10 ist eine Schraubendruckfeder 31 angeordnet, welche die beiden vorstehenden Enden 25, 26 des Querstiftes 22 des Sperrgliedes 4 gegen die der Lenkspindel 3 benachbarten Enden 32, 33 der beiden Langlöcher 27, 28 des Betätigungsgliedes 10 drückt. Das Sperrglied 4 kann gegen die Wirkung der Schraubendruckfeder 31 in das Sackloch 21 des Betätigungsgliedes 10 hineinlaufen, falls bei der Bewegung des Sperrgliedes 4 mittels des Betätigungsgliedes 10 in die Verriegelungsstellung keine Sperröffnung 12 der auf der Lenkspindel 3 sitzenden Sperrhülse 5 auf das Sperrglied 4 ausgerichtet sein sollte, um dessen freies Ende 11 aufzunehmen.

Zur Axialverschiebung des Betätigungsgliedes 10 in die Stellung gemäß Fig. 5 und weiter in die Stellung nach Fig. 2 und 8 unter Mitnahme des Sperrgliedes 4 in die erste bzw. zweite Entriegelungsstellung und in der entgegengesetzten Richtung unter Mitnahme des Sperrgliedes 4 in die Verriegelungsstellung ist ein mittels eines Elektromotors 34 mit umkehrbarer Drehrichtung hin- und herdrehbares Steuerglied 35 vorgesehen. Das Steuerglied 35 ist koaxial zum Betätigungsglied 10 angeordnet und umgibt das Betätigungsglied 10, ist im Gehäuse 2 um die gemeinsame Längsachse 8 des Sperrglied-Kanals 7 und der Betätigungsglied-Bohrung 13 zwischen einer zur Längsachse 8 koaxialen Ringfläche 36 des Gehäuses 2 und einer zur Längsachse 8 koaxialen Ringfläche 37 des Deckels 1 drehbar gelagert und ist als Schneckenrad mit einer Außenverzahung 38 ausgebildet, in welche eine auf der Ausgangswelle 39 des Elektromotors 34 befestigte Antriebsschnecke 40 eingreift. Beim Elektromotor 34 kann es sich um einen Zwölf-Volt-Gleichstrommotor handeln, dessen Drehrichtung durch Umpolen umgekehrt werden kann und welcher dann stillsteht, wenn er stromlos ist.

Das äußere Steuerglied 35 wirkt mit einem zylindrischen Querstift 41 des inneren Betätigungsgliedes 10 zusammen, welcher in einer zylindrischen Querbohrung 42 des Betätigungsgliedes 10 axial verschieblich gelagert ist. Dazu ist das Steuerglied 35 mit zwei schraubenlinienförmig verlaufenden inneren Nuten 43, 44 und zwei in derselben zur Drehachse 8 des Steuergliedes 35 senkrechten Ebene liegenden Zwischenflächen 45, 46 sowie zwei in derselben zur Drehachse 8 des Steuergliedes 35 senkrechten Ebene liegenden Endflächen 47, 48 versehen, wobei die Zwischenflächen 45, 46 und die Endflächen 47, 48 durch zwei jeweils in bestimmter Weise verlaufende Seitenflanken 49, 50 begrenzt sind.

Die beiden inneren Nuten 43, 44 des Steuergliedes 35 erstrecken sich entlang der zylindrischen Bohrung 51 des Steuergliedes 35, welche zur Aufnahme des Betätigungsgliedes 10 dient, und gehen jeweils über die eine Zwischenfläche 45 bzw. über die andere Zwischenfläche 46 des Steuergliedes 35 in die eine Endfläche 47 bzw. in die andere Endfläche 48 des Steuergliedes 35 über. Zwischen jeder Zwischenfläche 45 bzw. 46 und der zugehörigen Endfläche 47 bzw. 48 erstreckt sich eine Schrägfläche 52 bzw. 53 des Steuergliedes 35. Die Steigung der Schrägflächen 52, 53 ist mit derjenigen der Nuten 43, 44 identisch.

Die senkrechte erste Seitenflanke 49, welche die Zwischenfläche 45, die anschließende Schrägfläche 52 und die folgende Endfläche 47 der einen Nut 43 des Steuergliedes 35 begrenzt, verläuft vom Boden 54 dieser Nut 43 außen in einem gewissen Abstand 55 an der anderen Nut 44 des Steuergliedes 35 und an deren Zwischenfläche 46 vorbei bis zu einem Ende 56. Die senkrechte zweite Seitenflanke 50, welche die Zwischenfläche 46, die anschließende Schrägfläche 53 und die folgende Endfläche 48 der anderen Nut 44 des Steuergliedes 35 begrenzt, verläuft vom Boden 57 dieser Nut 44 nach außen zum Ende 56 der ersten Seitenflanke 49 hin und anschließend als Fortsetzung der ersten Seitenflanke 49 nach innen zu der der Aufnahme des Betätigungsgliedes 10 dienenden Bohrung 51 des Steuergliedes 35 hin, um am betreffenden Ende 58 in die Bohrung 51 überzugehen.

Am Deckel 1 des Gehäuses 2 ist ein Schalter 59 angeordnet, welcher mittels des Betätigungsgliedes 10 betätigbar ist, um die Erzeugung eines Signals zu bewirken, welches angibt, daß das Sperrglied 4 sich in der ersten Entriegelungsstellung gemäß Fig. 5 befindet, und welches vorliegen muß, damit der Motor des jeweiligen Kraftfahrzeugs angelassen werden kann. Der Schalter 59 weist einen axial beweglichen Schaltstift 60 auf, welcher sich durch eine Bohrung 61 des Deckels 1 erstreckt und mit welchem das deckelseitige Ende 62 des Betätigungsgliedes 10 zusammenwirkt.

Das geschilderte Lenkschloß für Kraftfahrzeuge funktioniert folgendermaßen.

Wenn das Sperrglied 4 sich in der Verriegelungsstellung befindet, dann liegt das Betätigungsglied 10 mit seiner das Sperrglied 4 umgebenden Stirnfläche 63 am Boden 64 der Bohrung 13 des Gehäuses 2 an, in welcher das Betätigungsglied 10 angeordnet ist, wobei der Querstift 41 des Betätigungsgliedes 10 bzw. die beiden Enden 65, 66 des Querstiftes 41, welche aus der Querbohrung 42 des Betätigungsgliedes 10 hervorragen, sich neben der Ringfläche 36 des Gehäuses 2 erstreckt bzw. erstrecken, an welcher das Steuerglied 35 anliegt.

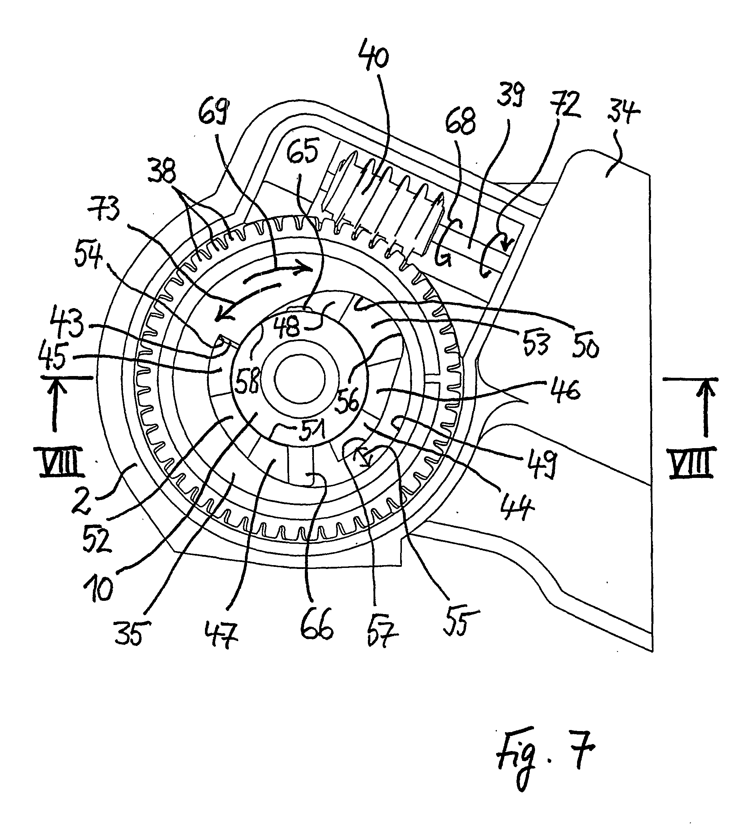

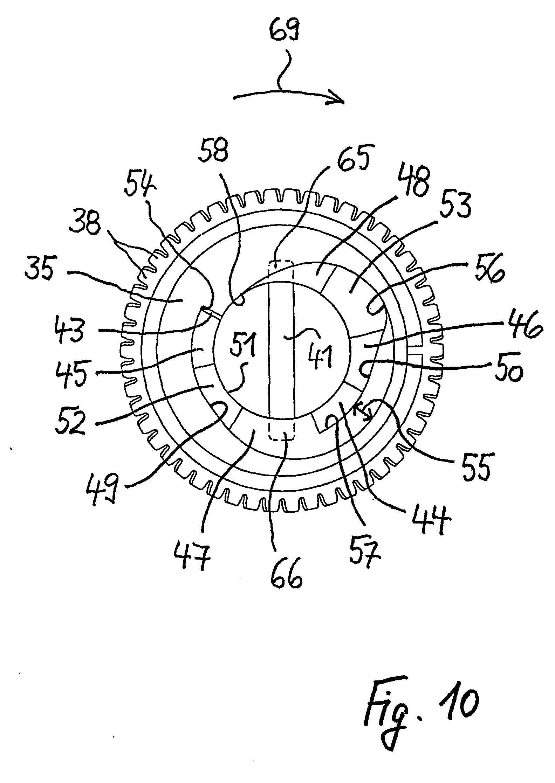

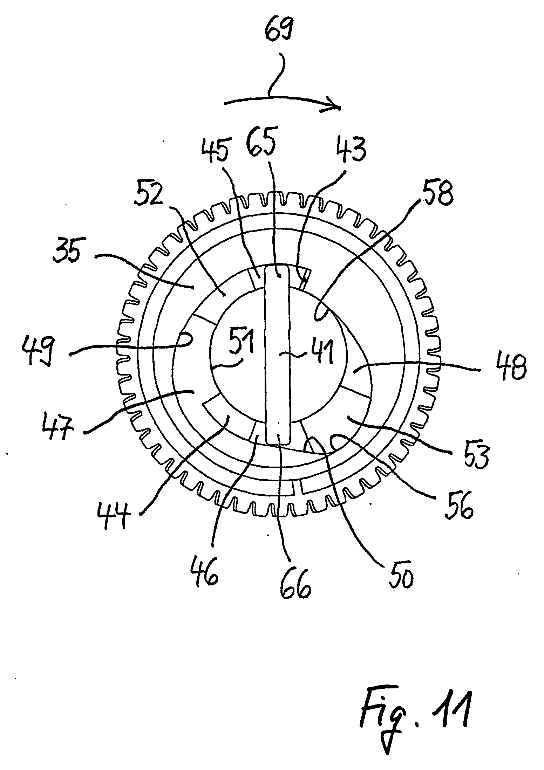

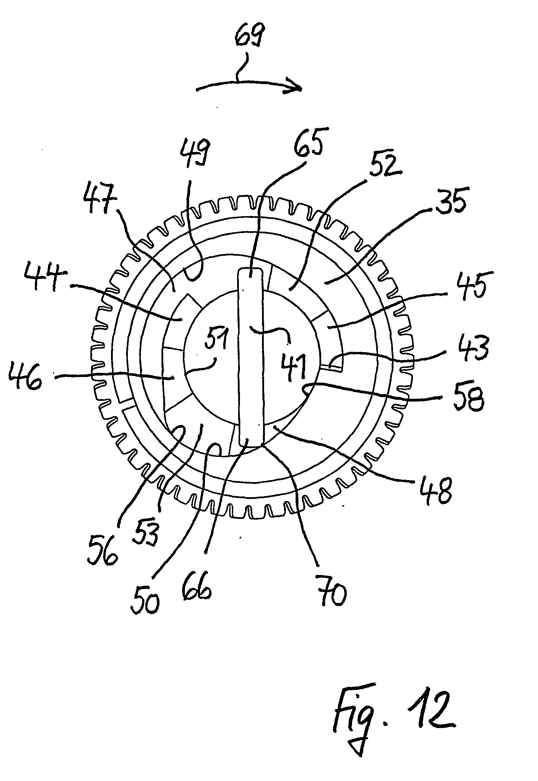

Um das Sperrglied 4 aus der Verriegelungsstellung und das Betätigungsglied 10 aus der erläuterten Axialstellung in Richtung des Pfeils 67 in Fig. 2 und 8 axial in die zweite Entriegelungsstellung bzw. in die entsprechende Axialstellung gemäß Fig. 2 und 8 zu verschieben, wird der Elektromotor 34 eingeschaltet, so daß er die Antriebsschnecke 40 in Richtung des Pfeils 68 und das Steuerglied 35 in Richtung des Pfeils 69 in Fig. 1 und 7 dreht. Dieses hat zur Folge, daß die beiden aus der Querbohrung 42 des Betätigungsgliedes 10 vorstehenden Enden 65, 66 des Querstiftes 41 des Betätigungsgliedes 10 in die beiden schraubenlinienförmig verlaufenden Nuten 43, 44 des Steuergliedes 35 eintreten, um in den Nuten 43, 44 zu deren Zwischenflächen 45, 46 zu laufen, wie Fig. 10 zeigt, und dann an den Zwischenflächen 45, 46 sowie an den anschließenden Schrägflächen 52, 53 entlang zu den Endflächen 47, 48 der Nuten 43, 44 gleiten, wie Fig. 11 und 12 veranschaulichen.

In denjenigen Drehstellungen des Steuergliedes 35, in welchen die Enden 65, 66 des Querstiftes 41 an den Zwischenflächen 45, 46 anliegen ( Fig. 11 ), nimmt das Betätigungsglied 10 diejenige Axialstellung ein, in welcher sich das Sperrglied 4 in der ersten Entriegelungsstellung befindet, wie aus Fig. 5 ersichtlich. Wenn die Enden 65, 66 des Querstiftes 41 an den Zwischenflächen 45, 46 anliegen, kann das Sperrglied 4 sich mit Sicherheit nicht aus der ersten Entriegelungsstellung in die Verriegelungsstellung zurückbewegen. Im Laufe derjenigen Drehung des Steuergliedes 35, bei welcher die Enden 65, 66 des Querstiftes 41 an den Schrägflächen 52, 53 anliegen, betätigt das Betätigungsglied 10 den Schalter 59. Sollte nach der Betätigung des Schalters 59 die Stromzufuhr zum Elektromotor 34 ausfallen, dann verhindern die Zwischenflächen 45, 46 im Zusammenwirken mit den Enden 65, 66 des Querstifes 41, daß das Sperrglied 4 sich aus der ersten Entriegelungsstellung in die Verriegelungsstellung zurückbewegt. In derjenigen Drehstellung des Steuergliedes 35, in welcher die Enden 65, 66 des Querstiftes 41 auf die Endflächen 47, 48 übergehen, hat das Betätigungsglied 10 diejenige Axialstellung erreicht, in welcher das Sperrglied 4 die zweite Entriegelungsstellung einnimmt. Im wesentlichen behält das Betätigungsglied 10 diese Axialstellung auch dann bei, wenn sich das Steuerglied 35 in Richtung des Pfeils 69 weiterdreht, so daß das Sperrglied 4 dann ebenfalls im wesentlichen in der zweiten Entriegelungsstellung bleibt.

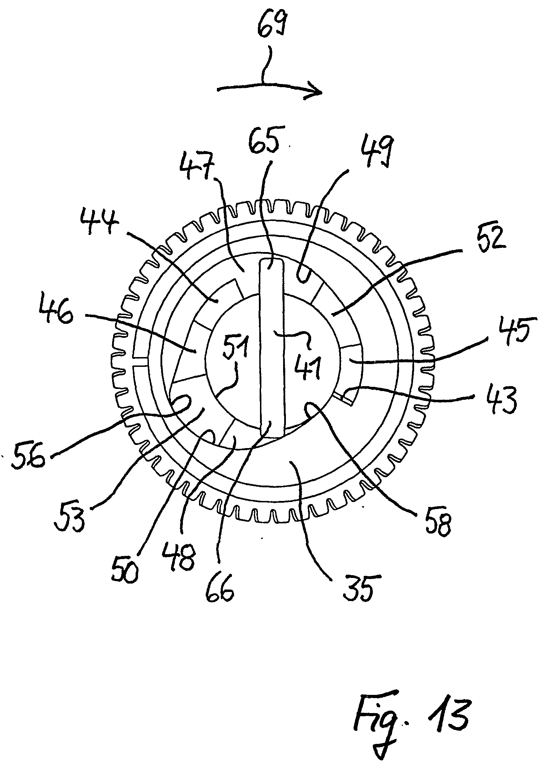

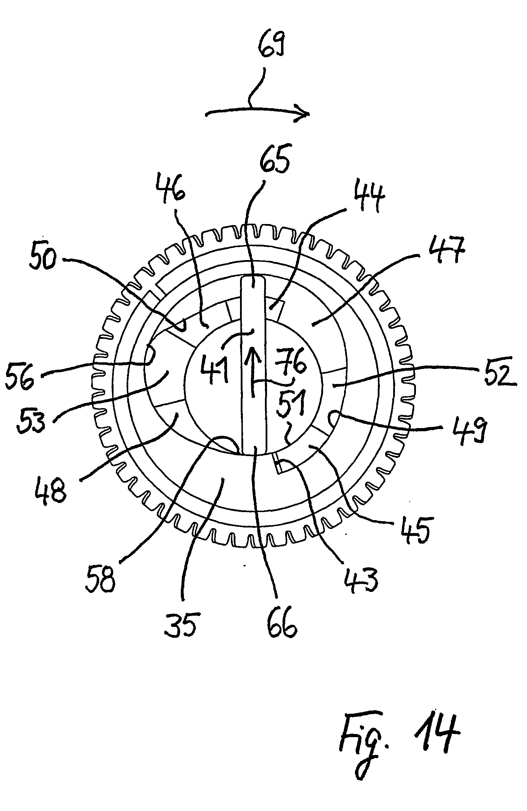

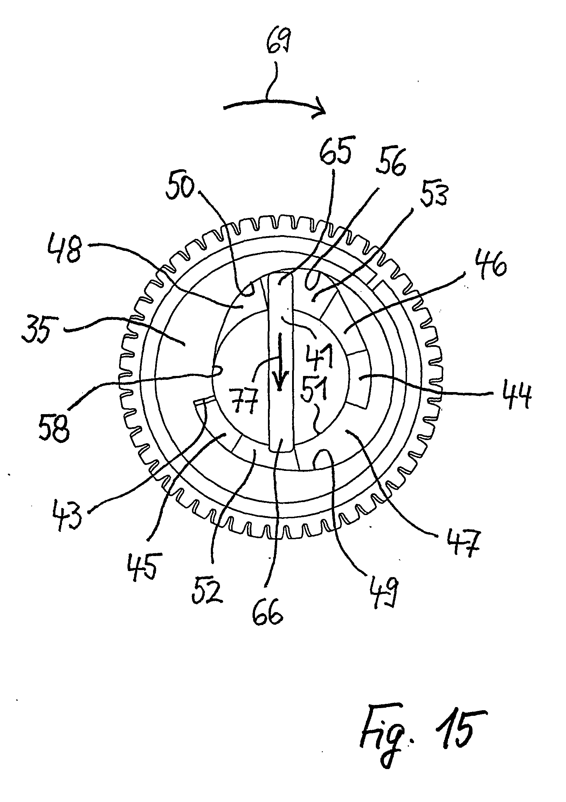

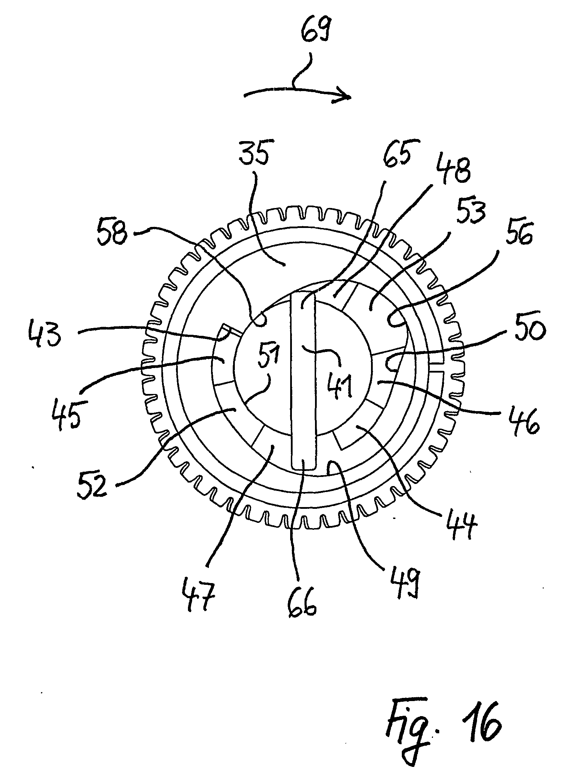

In diesem Fall laufen die beiden aus der Querbohrung 42 des Betätigungsgliedes 10 ragenden Enden 65, 66 des Querstiftes 41 auf den Endflächen 47, 48 des Steuergliedes 35 von dessen Schrägflächen 52, 53 weg, wie Fig. 12 bis 16 verdeutlichen. Dabei kommt das in Fig. 10 bis 16 untere Querstiftende 66 an der zweiten Seitenflanke 50 zur Anlage, und zwar an der Stelle 70 ( Fig. 12 ), um bei der weiteren Drehung des Steuergliedes 35 in Richtung des Pfeils 69 durch den Abschnitt der zweiten Seitenflanke 50, welcher sich zwischen der Stelle 70 und dem Ende 58 der zweiten Seitenflanke 50 erstreckt, in die Querbohrung 42 des Betätigungsgliedes 10 hineingeschoben zu werden ( Fig. 13 und 14 ), so daß das in Fig. 10 bis 16 obere Querstiftende 65 sich entsprechend weit aus der Querbohrung 42 des Betätigungsgliedes 10 herausbewegt, um auf der Endfläche 47 der einen Nut 43 über die andere Nut 44 des Steuergliedes 35 und deren Zwischenfläche 46 hinwegzulaufen und dann an der Schrägfläche 53 sowie der Endfläche 48 der anderen Nut 44 entlang zu gleiten und seinerseits durch die zweite Seitenflanke 50 in die Querbohrung 42 des Betätigungsgliedes 10 hineingeschoben zu werden ( Fig. 15 und 16 ), wobei das untere Querstiftende 66 sich aus der Querbohrung 42 des Betätigungsgliedes 10 auf die Schrägfläche 52 und die Endfläche 47 der einen Nut 43 schiebt. Solange sich das Steuerglied 35 in Richtung des Pfeils 69 dreht, kann der Querstift 41 des Betätigungsgliedes 10 die Endflächen 47, 48 und die Schrägflächen 52, 53 des Steuergliedes 35 nicht verlassen, so daß das Betätigungsglied 10 in den entsprechenden Axialstellungen bleibt, in welchen eine zwischen dem Deckel 1 des Gehäuses 2 und dem deckelseitigen Ende 62 des Betätigungsgliedes 10 angeordnete Scheibenfeder 71 den Querstift 41 bzw. dessen beide aus der Querbohrung 42 des Betätigungsgliedes 10 vorstehenden Enden 65, 66 gegen die Endflächen 47, 48 bzw. gegen die Schrägflächen 52, 53 drückt. Das Sperrglied 4 verharrt dementsprechend in der zweiten Entriegelungsstellung gemäß Fig. 2 und 8, und zwar im wesentlichen auch dann, wenn die Querstiftenden 65, 66 an den Schrägflächen 52, 53 anliegen.

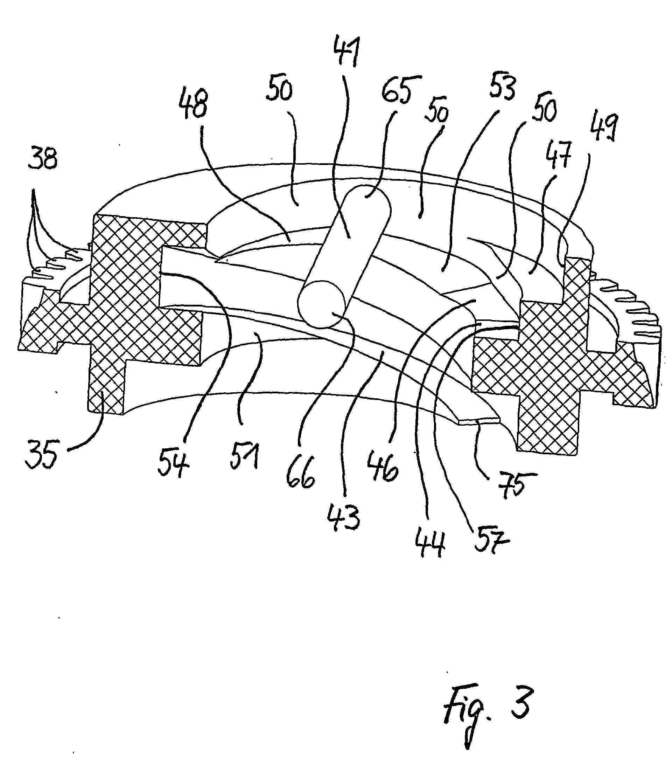

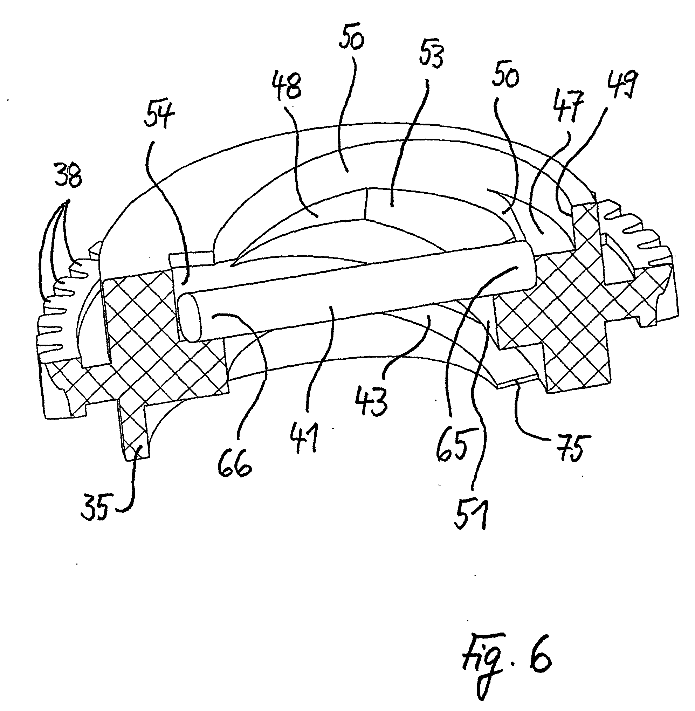

Erst dann, wenn der Elektromotor 34 in der umgekehrten Richtung umläuft und die Antriebsschnecke 40 sowie das Steuerglied 35 in der entgegengesetzten Richtung dreht, nämlich die Antriebsschnecke 40 in Richtung des Pfeils 72 und das Steuerglied 35 in Richtung des Pfeils 73 in Fig. 1 und 7, werden das Sperrglied 4 aus der zweiten Entriegelungsstellung und das Betätigungsglied 10 aus der entsprechenden Axialstellung gemäß Fig. 2 und 8 in Richtung des Pfeils 74 in Fig. 2 und 8 axial in die Verriegelungsstellung bzw. in die entsprechende Axialstellung geschoben. Dieses beginnt, sobald die aus der Querbohrung 42 des Betätigungsgliedes 10 vorstehenden Enden 65, 66 des Querstiftes 41 des Betätigungsgliedes 10 die Endflächen 47, 48 bzw. die Schrägflächen 52, 53 des Steuergliedes 35 verlassen, und ist abgeschlossen, sobald die Querstiftenden 65, 66 die Nuten 43, 44 des Steuergliedes 35 an ihren den Zwischenflächen 45, 46 fernen Enden verlassen, nämlich an dem aus Fig. 3 und 6 ersichtlichen Ende 75 der einen Nut 43 und dem entsprechenden Ende der anderen Nut 44. Die erste Seitenflanke 49 und die zweite Seitenflanke 50 am Steuerglied 35 gewährleisten, daß die Querstiftenden 65, 66 immer über die Zwischenflächen 45, 46 in die Nuten 43, 44 zurückgeführt werden, unabhängig davon, aus welcher Drehstellung bezüglich der Querstiftenden 65, 66 heraus das Steuerglied 35 in Richtung des Pfeils 73 gedreht wird, und also auch dann, wenn der Querstift 41 durch die zweite Seitenflanke 50 in Richtung des Pfeils 76 in Fig. 14 vollständig in die Querbohrung 42 des Betätigungsgliedes 10 hineingeschoben und dann in der entgegengesetzten Richtung entsprechend dem Pfeil 77 in Fig. 15 wieder aus der Querbohrung 42 des Betätigungsgliedes 10 herausgeschoben worden ist.

Der Elektromotor 34 muß also nicht sofort stillstehen, wenn das Sperrglied 4 die zweite Entriegelungsstellung und das Betätigungsglied 10 die entsprechende Axialstellung erreicht hat. Vielmehr kann er dann durchaus in Richtung des Pfeils 68 weiterlaufen und das Steuerglied 35 um einem beliebigen Winkel in Richtung des Pfeils 69 weiterdrehen, wobei das Sperrglied 4 sich allenfalls bis in die erste Entriegelungsstellung und das Betätigungsglied 10 sich allenfalls bis in die entsprechende Axialstellung bewegen würden. Auch ist es möglich, den Elektromotor 34 nach seinem Stillstand nochmal in Gang zu setzen, um das Steuerglied 35 in Richtung des Pfeils 69 zu drehen und eine neuerliche Betätigung des Schalters 59 durch das Betätigungsglied 10 zu bewirken, falls das mit Hilfe des Schalters 59 zu erzeugende Signal, welches angibt, daß das Sperrglied 4 die erste Entriegelungsstellung einnimmt, nochmals benötigt werden sollte, beispielsweise zu Kontrollzwecken.

In Fig. 1 bis 3 nimmt das Steuerglied 35 diejenige Drehstellung bezüglich des Querstiftes 41 des Betätigungsgliedes 10 ein, in welcher die aus der Querbohrung 42 des Betätigungsgliedes 10 vorstehenden Querstiftenden 65, 66 von den Schrägflächen 52, 53 auf die Endflächen 47, 48 der Nuten 43, 44 des Steuergliedes 35 übergehen, wenn das Steuerglied 35 aus der Drehstellung nach Fig. 15 weiter in Richtung des Pfeils 69 gedreht wird.

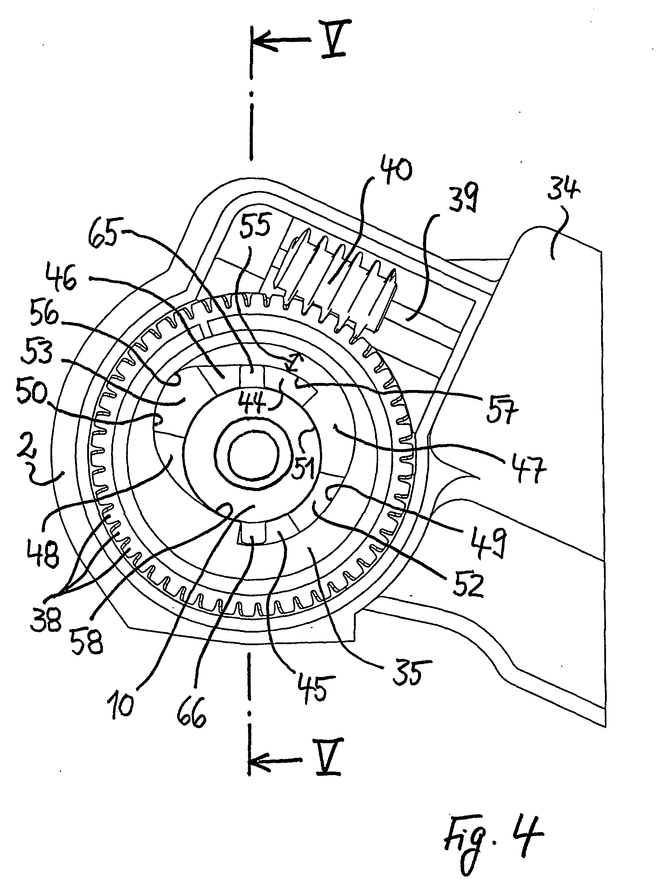

In Fig. 4 bis 6 befindet sich das Steuerglied 35 in derjenigen Drehstellung bezüglich des Querstiftes 41 des Betätigungsgliedes 10, in welcher die aus der Querbohrung 42 des Betätigungsgliedes 10 vorstehenden Querstiftenden 65, 66 von den Zwischenflächen 45, 46 der Nuten 43, 44 in die Nuten 43, 44 des Steuergliedes 35 laufen, wenn das Steuerglied 35 aus der Drehstellung gemäß Fig. 1 in Richtung des Pfeils 73 gedreht wird, um das Sperrglied 4 in seine Verriegelungsstellung zu bewegen.

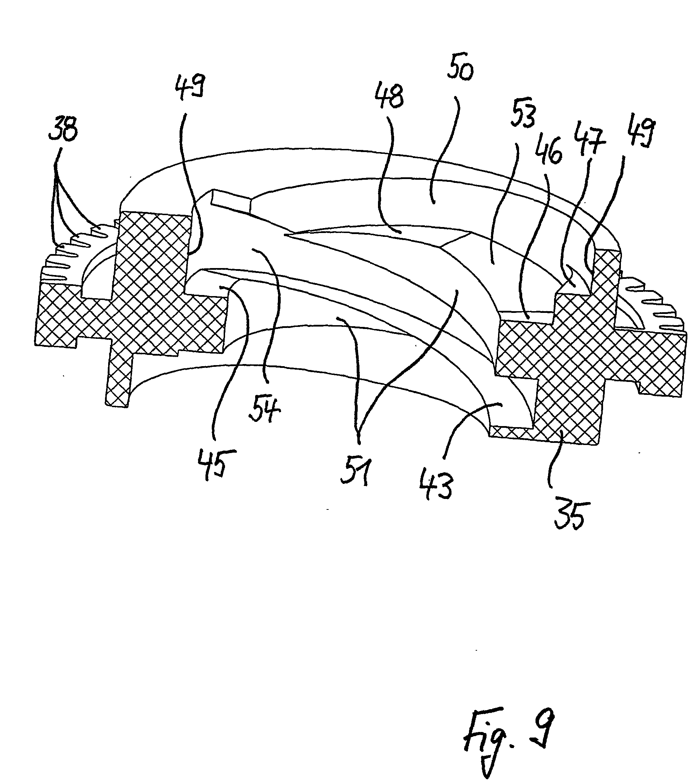

In Fig. 7 bis 9 ist das Steuerglied 35 aus der Drehstellung nach Fig. 16 in Richtung des Pfeils 73 zur Bewegung des Sperrgliedes 4 in seine Verriegelungsstellung gedreht worden, wobei die aus der Querbohrung 42 des Betätigungsgliedes 10 vorstehenden Enden 65, 66 des Querstiftes 41 des Betätigungsgliedes 10 sich an den Endflächen 47, 48 entlang auf die Schrägflächen 52, 53 der Nuten 43, 44 des Steuergliedes 35 zu bewegt haben.

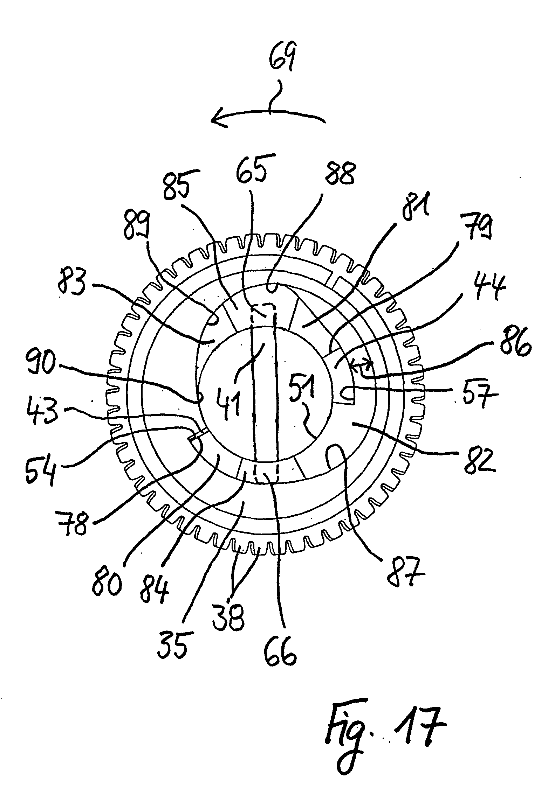

Fig. 17 zeigt ein Steuerglied 35, dessen beide Stirnseiten einander entsprechend ausgebildet sind, um in analoger Weise mit dem Querstift 41 des Betätigungsgliedes 10 zusammenzuwirken. Die beiden inneren Nuten 43, 44 des Steuergliedes 35 gehen also auch an ihren den Zwischenflächen 45, 46 und den Endflächen 47, 48 fernen, der Verriegelungsstellung des Sperrgliedes 4 zugeordneten Enden 78, 79 jeweils über eine weitere Zwischenfläche 80 bzw. 81 in eine weitere Endfläche 82 bzw. 83 über. Die beiden weiteren Zwischenflächen 80, 81 liegen in derselben zur Drehachse 8 des Steuergliedes 35 senkrechten Ebene. Die beiden weiteren Endflächen 82, 83 liegen in derselben zur Drehachse 8 des Steuergliedes 35 senkrechten Ebene. Zwischen jeder weiteren Zwischenfläche 80 bzw. 81 und der zugehörigen weiteren Endfläche 82 bzw. 83 erstreckt sich eine weitere Schrägfläche 84 bzw. 85. Die Steigung der weiteren Schrägflächen 84, 85 ist mit derjenigen der Nuten 43, 44 identisch.

Die weitere Zwischenfläche 80, die anschließende weitere Schrägfläche 84 und die folgende weitere Endfläche 82 der einen Nut 43 sind durch eine von deren Boden 54 außen in einem gewissen Abstand 86 an der anderen Nut 44 und an deren weiterer Zwischenfläche 81 vorbei verlaufende dritte Seitenflanke 87 begrenzt. Die weitere Zwischenfläche 81, die anschließende weitere Schrägfläche 85 und die folgende weitere Endfläche 83 der anderen Nut 44 sind durch eine von deren Boden 57 nach außen zum Ende 88 der dritten Seitenflanke 87 hin und anschließend als Fortsetzung der dritten Seitenflanke 87 nach innen zu der der Aufnahme des Betätigungsgliedes 10 dienenden Bohrung 51 des Steuergliedes 35 hin verlaufende vierte Seitenflanke 89 begrenzt, welche am betreffenden Ende 90 in die Bohrung 51 übergeht. Die senkrechte dritte Seitenflanke 87 und die senkrechte vierte Seitenflanke 89 verlaufen derart, daß der Querstift 41 des Betätigungsgliedes 10 nach dem beim Drehen des Steuergliedes 35 in der der Bewegung des Sperrgliedes 4 in die Verriegelungsstellung zugeordneten Richtung 73 erfolgten Übergang auf die beiden weiteren Schrägflächen 84, 85 beim Drehen des Steuergliedes 35 in der umgekehrten Richtung 69 immer in die beiden Nuten 43, 44 des Steuergliedes 35 zurückgeführt wird, auch dann, wenn der Querstift 41 durch die vierte Seitenflanke 89 vollständig in die Querbohrung 42 des Betätigungsgliedes 10 hineingeschoben und dann in der entgegengesetzten Richtung wieder aus der Querbohrung 42 hinausgeschoben worden ist.

Die Erfindung ist nicht auf das anhand von Fig. 1 bis 17 beschriebene Kraftfahrzeug-Lenkschloß beschränkt. Vielmehr kann auch bei solchen Lenkschlössern für Kraftfahrzeuge, deren Steuerglied statt der beiden mit den beiden Enden 65, 66 des Querstiftes 41 des Betätigungsgliedes 10 zusammenwirkenden, schraubenlinienförmig verlaufenden inneren Nuten 43, 44 zwei mit zwei radial zur Drehachse des Steuergliedes orientierten und einander bezüglich der Drehachse diametral gegenüberliegenden Vorsprüngen anderer Art des Betätigungsgliedes für das Sperrglied zusammenwirkende innere Schrägflächen oder ein mit nur einem bezüglich der Drehachse des Steuergliedes radialen Vorsprung des Betätigungsgliedes für das Sperrglied zusammenwirkendes und an dem der Entriegelungsstellung des Sperrgliedes zugeordneten Ende in eine zur Drehachse des Steuergliedes senkrechte ebene Endfläche übergehendes Innengewinde aufweist, jede Schrägfläche oder das Innengewinde über eine erfindungsgemäße Zwischenfläche in die Endfläche der Schrägfläche oder des Innengewindes übergehen, um eine Schalterbetätigung zu bewirken. Ferner kann die Erfindung auch bei solchen Kraftfahrzeug-Lenkschlössern verwirklicht werden, bei denen das Steuerglied nicht mit einem Betätigungsglied für das Sperrglied, sondern unmittelbar mit dem Sperrglied zusammenwirkt.

Die Erfindung kann nicht nur bei Schlössern zum Verriegeln der Lenkspindel eines Kraftfahrzeugs, sondern auch bei Schlössern zum Verriegeln anderer beweglicher Elemente verwirklicht werden.

## Patentansprüche

1. Schloß, insbesondere zum Verriegeln der Lenkspindel (3) eines Kraftfahrzeugs, mit einem Sperrglied (4), welches zwischen einer Verriegelungsstellung und einer Entriegelungsstellung hin- und herbewegbar ist, und mit einem mittels eines Antriebs (34) hin- und herdrehbaren Steuerglied (35) zur Axialverschiebung des Sperrgliedes oder eines mit dem Sperrglied (4) zusammenwirkenden Betätigungsgliedes (10) in der einen oder in der anderen Richtung, wobei das Steuerglied (35) das Sperrglied oder dessen Betätigungsglied (10) umschließt und
a) zwei innere Schrägflächen oder zwei schraubenlinienförmig verlaufende innere Nuten (43,44) aufweist, welche mit zwei einander bezüglich der Drehachse (8) des Steuergliedes (35) diametral gegenüberliegenden, radialen Vorsprüngen (65,66) des Sperrgliedes oder des Betätigungsgliedes (10) desselben zusammenwirken und jeweils an dem der Entriegelungsstellung des Sperrgliedes (4) zugeordneten Ende in eine Endfläche (47 bzw. 48) übergehen, die in einer zur Drehachse (8) des Steuergliedes (35) senkrechten Ebene liegt, oder
b) ein Innengewinde aufweist, welches mit einem bezüglich der Drehachse des Steuergliedes radialen Vorsprung des Sperrgliedes oder des Betätigungsgliedes desselben zusammenwirkt und an dem der Entriegelungsstellung des Sperrgliedes zugeordneten Ende in eine Endfläche übergeht, die in einer zur Drehachse des Steuergliedes senkrechten Ebene liegt,
**dadurch gekennzeichnet, daß** jede Schrägfläche oder Nut (43 bzw. 44) oder das Innengewinde des Steuergliedes (35) über eine Zwischenfläche (45 bzw. 46), welche in einer zur Drehachse (8) des Steuergliedes (35) senkrechten Ebene liegt, in die Endfläche (47 bzw. 48) der Schrägfläche oder Nut (43 bzw. 44) oder des Innengewindes übergeht,
wobei die beiden Zwischenflächen (45,46) der Schrägflächen oder Nuten (43,44) mit den beiden Vorsprüngen (65,66) des Sperrgliedes oder des Betätigungsgliedes (10) desselben zusammenwirken oder die Zwischenfläche des Innengewindes mit dem Vorsprung des Sperrgliedes oder des Betätigungsgliedes desselben zusammenwirkt, wenn das Sperrglied (4) eine erste Entriegelungsstellung einnimmt, und
wobei die beiden Endflächen (47,48) der Schrägflächen oder Nuten (43,44) mit den beiden Vorsprüngen (65,66) des Sperrgliedes oder des Betätigungsgliedes (10) desselben zusammenwirken oder die Endfläche des Innengewindes mit dem Vorsprung des Sperrgliedes oder des Betätigungsgliedes desselben zusammenwirkt, wenn das Sperrglied (4) über die erste Entriegelungsstellung hinaus in eine zweite Entriegelungsstellung bewegt worden ist.

2. Schloß nach Anspruch 1, **gekennzeichnet durch** einen Schalter (59), der zur Erzeugung eines Signals, welches angibt, daß das Sperrglied (4) die erste Entriegelungsstellung einnimmt, mittels des Sperrgliedes oder des Betätigungsgliedes (10) desselben betätigbar ist, während beim Drehen des Steuergliedes (35) in der der Bewegung des Sperrgliedes (4) in die zweite Entriegelungsstellung zugeordneten Richtung (69) die beiden Vorsprünge (65,66) des Sperrgliedes oder des Betätigungsgliedes (10) desselben von den beiden Zwischenflächen (45,46) zu den beiden Endflächen (47,48) der Schrägflächen oder Nuten (43,44) des Steuergliedes (35) laufen oder der Vorsprung des Sperrgliedes oder des Betätigungsgliedes desselben von der Zwischenfläche zu der Endfläche des Innengewindes des Steuergliedes läuft.

3. Schloß nach Anspruch 1 oder 2, **dadurch gekennzeichnet, daß**
a) die beiden Vorsprünge (65,66) des Sperrgliedes oder des Betätigungsgliedes (10) desselben von den Enden eines in einer Querbohrung (42) des Sperrgliedes oder des Betätigungsgliedes (10) desselben axial verschieblichen Querstiftes (41) gebildet sind,
b) die beiden Zwischenflächen (45,46) der Nuten (43,44) des Steuergliedes (35) in derselben zur Drehachse (8) des Steuergliedes (35) senkrechten Ebene und die beiden Endflächen (47,48) der Nuten (43,44) des Steuergliedes (35) in derselben zur Drehachse (8) des Steuergliedes (35) senkrechten Ebene liegen, und
c) die Zwischenfläche (45), die anschließende Schrägfläche (52) und die folgende Endfläche (47) einer Nut (43) des Steuergliedes (35) durch eine von deren Boden (54) außen im Abstand (55) an der anderen Nut (44) des Steuergliedes (35) und an deren Zwischenfläche (46) vorbei verlaufende erste Seitenflanke (49) und die Zwischenfläche (46), die anschließende Schrägfläche (53) und die folgende Endfläche (48) der anderen Nut (44) des Steuergliedes (35) durch eine von deren Boden (57) nach außen zur ersten Seitenflanke (49) hin und anschließend nach innen zum Sperrglied oder zum Betätigungsglied (10) desselben hin verlaufende zweite Seitenflanke (50) derart begrenzt sind, daß der Querstift (41) des Sperrgliedes oder des Betätigungsgliedes (10) desselben nach dem beim Drehen des Steuergliedes (35) in der der Bewegung des Sperrgliedes (4) in die zweite Entriegelungsstellung zugeordneten Richtung (69) erfolgten Übergang auf die beiden Schrägflächen (52,53) beim Drehen des Steuergliedes (35) in der umgekehrten Richtung (73) immer in die beiden Nuten (43,44) des Steuergliedes (35) zurückgeführt wird, auch dann, wenn der Querstift (41) durch die zweite Seitenflanke (50) vollständig in die Querbohrung (42) des Sperrgliedes oder des Betätigungsgliedes (10) desselben hineingeschoben und dann in der entgegengesetzten Richtung (77) wieder aus der Querbohrung (42) herausgeschoben worden ist ( Fig. 14,15).

4. Schloß nach Anspruch 3, **dadurch gekennzeichnet, daß** die Nuten (43,44) des Steuergliedes (35) jeweils an dem der Verriegelungsstellung des Sperrgliedes (4) zugeordneten Ende (78 bzw. 79) über eine weitere Zwischenfläche (80 bzw. 81) in eine weitere Endfläche (82 bzw. 83) übergehen,
wobei die beiden weiteren Zwischenflächen (80,81) der Nuten (43,44) des Steuergliedes (35) in derselben zur Drehachse (8) des Steuergliedes (35) senkrechten Ebene und die beiden weiteren Endflächen (82,83) der Nuten (43,44) des Steuergliedes (35) in derselben zur Drehachse (8) des Steuergliedes (35) senkrechten Ebene liegen und
wobei die weitere Zwischenfläche (80), die anschließende weitere Schrägfläche (84) und die folgende weitere Endfläche (82) einer Nut (43) des Steuergliedes (35) durch eine von deren Boden (54) außen im Abstand (86) an der anderen Nut (44) des Steuergliedes (35) und an deren weiterer Zwischenfläche (81) vorbei verlaufende dritte Seitenflanke (87) und die weitere Zwischenfläche (81), die anschließende weitere Schrägfläche (85) und die folgende weitere Endfläche (83) der anderen Nut (44) des Steuergliedes (35) durch eine von deren Boden (57) nach außen zur dritten Seitenflanke (87) hin und anschließend nach innen zum Sperrglied oder zum Betätigungsglied (10) desselben hin verlaufende vierte Seitenflanke (89) derart begrenzt sind, daß der Querstift (41) des Sperrgliedes oder des Betätigungsgliedes (10) desselben nach dem beim Drehen des Steuergliedes (35) in der der Bewegung des Sperrgliedes (4) in die Verriegelungsstellung zugeordneten Richtung (73) erfolgten Übergang auf die beiden weiteren Schrägflächen (84,85) beim Drehen des Steuergliedes (35) in der umgekehrten Richtung (69) immer in die beiden Nuten (43,44) des Steuergliedes (35) zurückgeführt wird, auch dann, wenn der Querstift (41) durch die vierte Seitenflanke (89) vollständig in die Querbohrung (42) des Sperrgliedes oder des Betätigungsgliedes (10) desselben hineingeschoben und dann in der entgegengesetzten Richtung wieder aus der Querbohrung (42) herausgeschoben worden ist.

## Claims

1. Lock, particularly for locking the steering spindle (3) of a motor-vehicle, comprising a locking element (4), which can be displaced to and fro between a locked and an unlocked position, and further comprising a control element (35), which can be rotated to and fro by means of a drive (34) causing an axial displacement in one direction or the other of the locking element or of a drive element (10), which cooperates with the locking element (4), wherein the control element (35) encloses the locking element or its drive element (10), and comprises:
(a) two inner bevels or two internal helical grooves (43, 44), which cooperate with two radial projections (65, 66) of the locking element or its drive element (10) disposed diametrically opposite to one another relative to the axis of rotation (8) of the control element (35), and which each merge at the end associated with the unlocked position of the locking element (4), into an end surface (47, 48) disposed in a plane extending perpendicular to the axis of rotation (8) of the control element (35), or
(b) an internal thread, which cooperates with a projection of the locking element or its drive element, the projection extending radially relative to the axis of rotation of the control element, and which merges at the end associated with the unlocked position of the locking element into an end surface disposed in a plane perpendicular to the axis of rotation of the control element
**characterised in that**
each bevel or groove (43, 44) or the internal thread of the control element (35) merges into the end surface (47, 48) of the bevel or groove (43, 44) or of the internal thread via an intermediate surface (45, 46), which is disposed in a plane extending perpendicular to the axis of rotation (8) of the control element (35),
wherein the two intermediate surfaces (45, 46) of the bevels or grooves (43, 44) cooperate with the two projections (65, 66) of the locking element or its drive element (10), or the intermediate surface of the internal thread cooperates with the projection of the locking element or its drive element, when the locking element (4) assumes a first unlocked position, and
wherein the two end surfaces (47, 48) of the bevels or grooves (43, 44) cooperate with the two projections (65, 66) of the locking element or its drive element (10), or the end surface of the internal thread cooperates with the projection of the locking element or its drive element, when the locking element (4) has been displaced beyond the first unlocked position into a second unlocked position.

2. Lock according to claim 1, **characterised by** a switch (59), which can be actuated by means of the locking element (4) or its drive element (10) in order to generate a signal indicating that the locking element (4) has reached the first unlocked position, while the two projections (65, 66) of the locking element or its drive element (10) move from the two intermediate surfaces (45, 46) to the two end surfaces (47, 48) of the bevels or grooves (43, 44) of the control element (35), or the projection of the locking element or its drive element moves from the intermediate surface to the end surface of the internal thread of the control element, during the rotation of the control element (35) in the direction (69) associated with moving the locking element (4) into the second unlocked position.

3. Lock according to any one of claims 1 and 2,
**characterised in that**
(a) the two projections (65, 66) of the locking element or of its drive element (10) are constituted by the ends of a cross-pin (41) axially displaceable in a cross-borehole (42) of the locking element or its drive element (10),
(b) the two intermediate surfaces (45, 46) of the grooves (43, 44) of the control element (35) are disposed in a common plane extending perpendicular to the axis of rotation (8) of the control element (35), and the two end surfaces (47, 48) of the grooves (43, 44) of the control element (35) are disposed in a common plane extending perpendicular to the axis of rotation (8) of the control element (35), and
(c) the intermediate surface (45), the adjoining bevel (52) and the following end surface (47) of a groove (43) of the control element (35) are bounded by a first side wall (49) running outwards from the base (54) of the groove (43) at a distance (55) from the other groove (44) of the control element (35) and past its intermediate surface (46); and the intermediate surface (46), the adjoining bevel (53) and the following end surface (48) of the other groove (44) of the control element (35) are bounded by a second side wall (50) running outwards from the base (57) of the groove (44) towards the first side wall (49) and then inward towards the locking element or its drive element (10), in such a manner that, after displacement onto the two bevels (52, 53) as a result of the rotation of the control element (35) in the direction (69) associated with moving the locking element (4) into the second unlocked position, the cross-pin (41) of the locking element or its drive element (10) is always returned into the two grooves (43, 44) of the control element (35) when the control element (35) is rotated in the opposite direction (73), even if the cross-pin (41) has been pushed by the second side wall (50) fully into the cross-borehole (42) of the locking element or its drive element (10) and then out of the cross-borehole (42) in the opposite direction (77) (Fig. 14, 15).

4. Lock according to claim 3, **characterised in that** the grooves (43, 44) of the control element (35) each merge at an end (78, 79) associated with the locked position of the locking element (4) via a further intermediate surface (80, 81) into a further end surface (82, 83),
wherein the two further intermediate surfaces (80, 81) of the grooves (43, 44) of the control element (35) are disposed in a common plane, which extends perpendicular to the axis of rotation (8) of the control element (35), and the two further end surfaces (82, 83) of the grooves (43, 44) of the control element (35) are disposed in a common plane, which extends perpendicular to the axis of rotation (8) of the.control element (35), and
wherein the further intermediate surface (80), the adjoining further bevel (84) and the following further end surface (82) of a groove (43) of the control element (35) are bounded by a third side wall (87) running outwards from the base (54) of the groove (43) at a distance (86) from the other groove (44) of the control element (35) and past its further intermediate surface (81); and the further intermediate surface (81), the adjoining further bevel (85) and the following further end surface (83) of the other groove (44) of the control element (35) are bounded by a fourth side wall (89) running outwards from the base (57) of the groove (44) towards the third side wall (87) and then inwards towards the locking element or its drive element (10), in such a manner that, after displacement onto the two further bevels (84, 85) as a result of the rotation of the control element (35) in the direction (73) associated with moving the locking element (4) into the locked position, the cross-pin (41) of the locking element or its drive element (10) is always returned into the two grooves (43, 44) of the control element (35), when the control element (35) is rotated in the opposite direction (69), even if the cross-pin (41) has been pushed by the fourth side wall (89) fully into the cross-borehole (42) of the locking element or its drive element (10) and then out of the cross-borehole (42) in the opposite direction.

## Revendications

1. Serrure, servant notamment à verrouiller l'arbre de direction (3) d'une automobile, avec un organe de verrouillage (4) qui peut être déplacé en va-et-vient entre une position de verrouillage et une position de déverrouillage et avec un organe de commande (35) pouvant être entraîné en rotation en va-et-vient au moyen d'un mécanisme d'entraînement (34) pour le déplacement axial de l'organe de verrouillage ou d'un organe d'actionnement (10) coopérant avec l'organe de verrouillage (4) dans l'une ou l'autre direction, dans lequel l'organe de commande (35) entoure l'organe de verrouillage ou l'organe d'actionnement (10) de celui-ci, et
a) présente deux surfaces obliques intérieures ou deux gorges intérieures (43, 44) hélicoïdales, qui coopèrent avec deux saillies radiales (65, 66) de l'organe de verrouillage ou de son organe d'actionnement (10), diamétralement opposées l'une à l'autre par rapport à l'axe de rotation (8) de l'organe de commande (35) et qui se raccordent chacune, à l'extrémité correspondant à la position de déverrouillage de l'organe de verrouillage (4), à une surface d'extrémité (47, 48) qui se trouve dans un plan perpendiculaire à l'axe de rotation (8) de l'organe de commande (35), ou
b) présente un filetage intérieur qui coopère avec une saillie de l'organe de verrouillage ou de son organe d'actionnement, radiale par rapport à l'axe de rotation de l'organe de commande et se raccorde, à son extrémité correspondant à la position de déverrouillage de l'organe de verrouillage, à une surface d'extrémité qui se trouve dans un plan perpendiculaire à l'axe de rotation de l'organe de commande,
**caractérisée en ce que** chaque surface oblique ou gorge (43 ou 44) ou le filetage intérieur de l'organe de commande (35) se raccorde, via une surface intermédiaire (45 ou 46) qui se trouve dans un plan perpendiculaire à l'axe de rotation (8) de l'organe de commande (35), à la surface d'extrémité (47 ou 48) de la surface oblique ou de la gorge (43 ou 44) ou du filetage intérieur,
les deux surfaces intermédiaires (45, 46) des surfaces obliques ou des gorges (43, 44) coopérant avec les deux saillies (65, 66) de l'organe de verrouillage ou de son organe d'actionnement (10), ou la surface intermédiaire du filetage intérieur coopérant avec la saillie de l'organe de verrouillage ou de son organe d'actionnement, lorsque l'organe de verrouillage (4) prend une première position de déverrouillage et
les deux surfaces d'extrémité (47, 48) des surfaces obliques ou des gorges (43, 44) coopérant avec les deux saillies (65, 66) de l'organe de verrouillage ou de son organe d'actionnement (10), ou la surface d'extrémité du filetage intérieur coopérant avec la saillie de l'organe de verrouillage ou de son organe d'actionnement lorsque l'organe de verrouillage (4) a été déplacé, au-delà de la première position de déverrouillage, dans une deuxième position de déverrouillage.

2. Serrure selon la revendication 1, **caractérisée en ce qu'**elle comporte un commutateur (59) qui peut être actionné au moyen de l'organe de verrouillage ou de l'organe d'actionnement (10) de celui-ci pour produire un signal indiquant que l'organe de verrouillage (4) prend la première position de déverrouillage, pendant que, lors de la rotation de l'organe de commande (35) dans le sens (69) correspondant au déplacement de l'organe de verrouillage (4) vers la deuxième position de déverrouillage, les deux saillies (65, 66) de l'organe de verrouillage ou de son organe d'actionnement (10) passent des deux surfaces intermédiaires (45, 46) aux deux surfaces d'extrémité (47, 48) des surfaces obliques ou des gorges (43, 44) de l'organe de commande (35), ou la saillie de l'organe de verrouillage ou de son organe d'actionnement passe de la surface intermédiaire à la surface d'extrémité du filetage intérieur de l'organe de commande.

3. Serrure selon la revendication 1 ou 2, **caractérisée en ce que** :
a) les deux saillies (65, 66) de l'organe de verrouillage ou de son organe d'actionnement (10) sont formées par les extrémités d'une goupille transversale (41) mobile dans le sens axial dans un trou transversal (42) de l'organe de verrouillage ou dé l'organe d'actionnement (10) de celui-ci,
b) les deux surfaces intermédiaires (45, 46) des gorges (43, 44) de l'organe de commande (35) se trouvent dans le même plan perpendiculaire à l'axe de rotation (8) de l'organe de commande (35) et les deux surfaces d'extrémité (47, 48) des gorges (43, 44) de l'organe de commande (35) se trouvent dans le même plan perpendiculaire à l'axe de rotation (8) de l'organe de commande (35), et
c) la surface intermédiaire (45), la surface oblique (52) adjacente et la surface d'extrémité (47) suivante d'une gorge (43) de l'organe de commande (35) sont délimitées par un premier flanc latéral (49) partant de son fond (54) et passant à l'extérieur à distance (55) de l'autre gorge (44) de l'organe de commande (35) et le long de la surface intermédiaire (46) de celui-ci, et la surface intermédiaire (46), la surface oblique (53) adjacente et la surface d'extrémité (48) suivante de l'autre gorge (44) de l'organe de commande (35) par un deuxième flanc latéral (50) partant de son fond (57) et passant à l'extérieur en direction du premier flanc latéral (49) puis vers l'intérieur en direction de l'organe de verrouillage ou de l'organe d'actionnement (10) de celui-ci, de telle sorte que la goupille transversale (41) de l'organe de verrouillage ou de l'organe d'actionnement (10) de celui-ci, après le passage sur les deux surfaces obliques (52, 53) résultant de la rotation de l'organe de commande (35) dans le sens (69) correspondant au déplacement de l'organe de verrouillage (4) vers la deuxième position de déverrouillage, soit toujours ramenée, lors de la rotation de l'organe de commande (35) en sens inverse (73), dans les deux gorges (43, 44) de l'organe de commande (35), même lorsque la goupille transversale (41), par le deuxième flanc latéral (50), a été complètement enfoncée dans le trou transversal (42) de l'organe de verrouillage ou de l'organe d'actionnement (10) de celui-ci et puis a été repoussée dans le sens opposé (77) hors du trou transversal (42) ( Figures 14, 15).

4. Serrure selon la revendication 3, **caractérisée ce que** les gorges (43, 44) de l'organe de commande (35) se raccordent chacune, à l'extrémité (78 ou 79) correspondant à la position de verrouillage de l'organe de verrouillage (4), via une autre surface intermédiaire (80 ou 81), à une autre surface d'extrémité (82 ou 83),
les deux autres surfaces intermédiaires (80, 81) des gorges (43, 44) de l'organe de commande (35) se trouvant dans le même plan, perpendiculaire à l'axe de rotation (8) de l'organe de commande (35), et les deux autres surfaces d'extrémité (82, 83) des gorges (43, 44) de l'organe de commande (35) se trouvant dans le même plan, perpendiculaire à l'axe de rotation (8) de l'organe de commande (35), et
l'autre surface intermédiaire (80), l'autre surface oblique (84) adjacente et l'autre surface d'extrémité (82) suivante d'une gorge (43) de l'organe de commande (35) étant délimitées par un troisième flanc latéral (67) partant de son fond (54) et passant à l'extérieur à distance (86) de l'autre gorge (44) de l'organe de commande (35) et le long de son autre surface intermédiaire (81), et l'autre surface intermédiaire (81), l'autre surface oblique (85) adjacente et l'autre surface d'extrémité (83) suivante de l'autre gorge (44) de l'organe de commande (35) étant délimitées par un quatrième flanc latéral (89) partant de son fond (57) et passant à l'extérieur en direction du troisième flanc latéral (87) puis vers l'intérieur en direction de l'organe de verrouillage ou de son organe d'actionnement (10), de telle sorte que la goupille transversale (41) de l'organe de verrouillage ou de l'organe d'actionnement (10) de celui-ci, après le passage sur les deux autres surfaces obliques (84, 85) résultant de la rotation de l'organe de commande (35) dans le sens (73) correspondant au déplacement de l'organe de verrouillage (4) vers la position de verrouillage, soit toujours ramenée, lors de la rotation de l'organe de commande (35) dans le sens inverse (69), dans les deux gorges (43, 44) de l'organe de commande (35), même lorsque la goupille transversale (41), par le quatrième flanc latéral (89), a été complètement enfoncée dans le trou transversal (42) de l'organe de verrouillage ou de l'organe d'actionnement (10) de celui-ci et a été repoussée ensuite en sens inverse hors du trou transversal (42).
